(19) Europäisches Patentamt / European Patent Office / Office européen des brevets

(11) **EP 4 332 903 A1**

(12) **EUROPEAN PATENT APPLICATION**

(43) Date of publication:
**06.03.2024 Bulletin 2024/10**

(21) Application number: **22193316.1**

(22) Date of filing: **31.08.2022**

(51) International Patent Classification (IPC):
**G06T 9/00** *(2006.01)*        **G06N 3/08** *(2023.01)*

(52) Cooperative Patent Classification (CPC):
**G06T 9/001; G06N 3/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
**Toyota-shi, Aichi-ken, 471-8571 (JP)**
• **ETH Zurich - The Swiss Federal Institute of Technology Zurich**
**8092 Zurich (CH)**

(72) Inventors:
• **ABBELOOS, Wim**
**1140 BRUSSELS (BE)**

• **OBUKHOV, Anton**
**8092 ZURICH (CH)**
• **USVYATSOV, Mikhail**
**8092 ZURICH (CH)**
• **SAKARIDIS, Christos**
**8092 ZURICH (CH)**
• **SCHINDLER, Konrad**
**8092 ZURICH (CH)**
• **VAN GOOL, Luc**
**8092 ZURICH (CH)**

(74) Representative: **Cabinet Beau de Loménie**
**158, rue de l'Université**
**75340 Paris Cedex 07 (FR)**

Remarks:
Amended claims in accordance with Rule 137(2) EPC.

(54) **METHODS FOR COMPRESSING AND DECOMPRESSING DATA USING TENSOR TRAIN DECOMPOSITION, AND ASSOCIATED DEVICES, COMPUTER PROGRAMS AND STORAGE MEDIUM**

(57)    A computer-implemented method for compressing a multi-dimensional array of data comprising a plurality of vector elements having the same number R of scalar elements, the method comprising obtaining (E10) D subsequent tensor cores ($C^1$-$C^D$) forming a Tensor Train Decomposition, said method comprising at least one iteration comprising following steps of:
• obtaining (E20) current tensor cores;
• obtaining (E30) approximations ($A^1$-$A^B$) of B subsequent vector elements ($E^1$-$E^B$) of said array of data by determining matrix product between sections of said tensor cores at indices indexing said B subsequent vector elements; and
• modifying (E40) values of said tensor cores with gradient descent, to minimize an approximation error between said B subsequent vector elements and their obtained approximations,
and a step of obtaining (E50) compression of said array of data from the Tensor Train Decomposition formed by the tensor cores modified after the plurality of iterations.

[Fig. 1]

**Description**

Field of the invention

The present invention relates to the field of data processing. It relates more particularly to a method for compressing data. The invention also relates to a data processing method for decompressing compressed data. The invention finds a particularly advantageous, although not limiting, application in the compression of radiance fields representing a three-dimensional space.

Description of Related Art

Data compression has many practical applications as it enables to decrease memory required to store data or to store data too large to be stored as is on a standard memory storage hardware. An example of such data is high-definition grid radiance field which are grids of voxels each containing information for rendering a two-dimensional image of the scene from any point of view. Grid radiance fields are for example used for rendering photorealistic three-dimensional scenes.

Techniques of tensor decomposition are known to be efficient for compressing such data. A compression of data here means a representation of the data in a less memory-intensive form. Such a representation may only provide an approximation of the data, which may be more or less accurate.

Several works propose methods for computing tensor train decompositions to determine low-memory representations of data. (Oseledets, 2011, "Tensor-Train Decomposition") and (Zhou et al, 2022, "Optimal High-order Tensor SVD via Tensor-Train Orthogonal Iteration") propose tensor train decomposition constructed using SVD (Singular Value Decomposition) principles and require storing the whole data to be represented. (Oseledets et al, 2009, "TT-cross approximation for multidimensional arrays") enables to construct tensor train decomposition of data without requiring the storage of the full tensor but has been observed to be very sensitive to noise in data: the compression provided with their method is strongly degraded as noise is present in the data. (Dolgov, 2014, "Computation of extreme eigenvalues in higher dimensions using block tensor train format") proposed a modification of the tensor train decomposition, which allows storage of vector fields instead of scalar fields, by relaxing rank constraints imposed on the tensor train decomposition, discussed further.

The work of (Chen et al, 2022, "TensoRF: Tensorial Radiance Fields") proposes another type of tensor decomposition for compressing radiance fields. Their method employs triplanar decomposition of the volume, and on top of the decomposition, requires storing occupancy mask of the represented data in an uncompressed form. Overall, their method is limited to representing small scenes and otherwise is heavily crafted towards representing radiance fields.

There is a need for a generic data compression method without the drawbacks observed in the prior art, i.e. a method which is less memory intensive either during the phase of determining a compression of the data, or for the compressed representation itself, or during the phase of determining the decompressed data representation; and a method which is more robust with respect to noise in data. Additionally, the desired method should be able to perform compression through on-demand evaluation of the target function within the specified grid, and update parameters of the decomposition without decompressing potentially intractable (large) grids. Additionally, the desired compression method should be generic enough to work with data volumes of arbitrary dimensionality (beyond 3 dimensions), and support hierarchical spaces (grids) often seen in structured spaces, such as the 3D world around us.

Summary

The present disclosure overcomes one or more deficiencies of the prior art by proposing a computer-implemented method for compressing a multi-dimensional array of data comprising a plurality of vector elements each having the same number R of scalar elements, the method comprising obtaining D subsequent tensor cores forming a Tensor Train Decomposition such that:

- said subsequent tensor cores require less memory storage than said array of data,
- each $k^{th}$ tensor core of said D subsequent tensor cores having two said rank axes of size $R_{k-1}$ and $R_k$, with k between 1 and D, $R_0=1$ and $R_D=R$, the size of said rank axes defining the degree of data approximation precision,
- each $k^{th}$ tensor core of said D subsequent tensor cores having a said mode axis of size $M_k$, with k between 1 and D,
- each vector element is indexed by D subsequent indices and is approximated by a product of D sections, at said subsequent indices, of said subsequent tensor cores,
- a section at index $i_k$ of a $k^{th}$ core of said D subsequent tensor cores is the $i_k^{th}$ section of this core along its mode axis, with $i_k$ between 1 and $M_k$,

said method comprising one or more training iterations, each training iteration comprising following steps of:

- obtaining current tensor cores;
- obtaining approximations of B subsequent vector elements of said array of data by determining matrix product between sections of said tensor cores at indices indexing said B subsequent vector elements; and
- modifying values of said tensor cores with gradient descent, to minimize an approximation error between said B subsequent vector elements and their obtained approximations,

and a step of obtaining compression of said array of data from the Tensor Train Decomposition formed by the tensor cores modified after the plurality of iterations.

Correlatively, the invention proposes a device for compressing a multi-dimensional array of data comprising a plurality of vector elements having the same number R of scalar elements, the device comprising a module of obtaining D subsequent tensor cores forming a Tensor Train Decomposition such that:

- said subsequent tensor cores require less memory storage than said array of data,
- each $k^{th}$ tensor core of said D subsequent tensor cores having two said rank axes of size $R_{k-1}$ and $R_k$, with k between 1 and D, $R_0=1$ and $R_D=R$, the size of said rank axes defining the degree of data approximation precision
- each $k^{th}$ tensor core of said D subsequent tensor cores having a said mode axis of size $M_k$, with k between 1 and D,
- each vector element is indexed by D subsequent indices and is approximated by a product of D sections, at said subsequent indices, of said subsequent tensor cores,
- a section at index $i_k$ of a $k^{th}$ core of said D subsequent tensor cores is the $i_k^{th}$ section of this core along its mode axis, with $i_k$ between 1 and $M_k$,

said device comprising a module of implementing at least one training iteration of said tensor cores, each training iteration comprising following steps of:

- obtaining current tensor cores;
- obtaining approximations of B subsequent vector elements of said array of data by determining matrix product between sections of said tensor cores at indices indexing said B subsequent vector elements; and
- modifying values of said tensor cores with gradient descent, to minimize an approximation error between said B subsequent vector elements and their obtained approximations,

and a module of obtaining compression of said array of data from the Tensor Train Decomposition formed by the tensor cores modified after the plurality of iterations.

The above method is based on tensor cores forming a tensor train decomposition. A tensor train decomposition is a representation of a tensor as a product of three-dimensional tensors of lower sizes, called tensor cores. An element of this tensor corresponds to an approximation of an element of the data. The term "approximation" refers here to a quantity computed to approach an observed quantity (an element of the data). An approximation can be more or less accurate. In order the approximations of data elements to be accurate, the values of the tensor cores are modified such as to minimize errors between data elements and approximations of these elements determined using the tensor train decomposition.

In this demand, the precision of the tensor cores or the precision of the compression both refer to the precision of the approximations of data elements determined by the tensor train decomposition, i.e. how close are the values of these approximations to the values of elements of data.

The invention uses a tensor train decomposition called block tensor train decomposition (Dolgov, 2014, "Computation of extreme eigenvalues in higher dimensions using block tensor train format"), wherein the size $R_D$ of the last tensor core can be equal to or greater than 1.

The compressing method according to the invention proposes a solution for reducing the memory cost of data compression. In this purpose, the proposed method enables to construct a compression of the data in the form of a block tensor train decomposition, without having to store the whole data.

Indeed, the invention proposes, for each iteration for modifying the values of the tensor cores, to select a subpart of B elements of data, where B is a given integer number which, for instance, may be chosen according to the memory capacity of the computer.

In order to compute the approximations of these B elements using block tensor train decomposition made of subsequent tensor cores, each element is approximated with sections of the subsequent tensor cores.

A section of a N-dimensional tensor at a given index along an axis is a (N-1)-dimensional tensor. For instance, the section of a matrix at index 3 along its second axis is the $3^d$ column of this matrix. For a three-dimensional tensor such as a tensor core, a section along one of its axis is a matrix.

In this demand, the term "subsequent" is employed when order is required. For instance, an element of data is indexed by subsequent indices. The same indices in a different order correspond to another element of data.

In order to achieve a modification of the tensor cores without storing the whole data (i.e. only B vector elements at a time), the invention proposes to use a gradient descent algorithm, which is commonly used in the field of machine learning.

It has been observed that the method for compressing according to the invention enables to maintain the quality of the compression even if noise is added or present in the data, unlike methods from prior art, employing SVD based methods.

In a particular embodiment, said data forms a grid radiance field.

The term "grid radiance field" is used here to mean a representation of a scene enabling to render view-dependent image of the scene. Such a radiance field is an array with three axes corresponding to the three spatial dimensions and a fourth axis corresponding to representation of color and light density in space. Such a radiance field is a tridimensional grid of vector elements, also called voxels. The values contained in a vector element (voxel) may be coefficients of spherical harmonic for each color channel (Red, Blue and Green for instance), which enable to render the three-dimensional space delimited by this voxel.

The invention is particularly advantageous for compressing grid radiance fields since such data are memory intensive and may not be stored entirely on a single computation module such as a GPU for sufficiently large grid sizes.

Furthermore, a grid radiance field may require to be built up bit by bit without reaching a full coverage of the whole scene space. The invention advantageously allows a representation of the scene to be compressed by training the tensor cores only from those parts of the grid that are acquired as they are acquired.

According to a particular embodiment of the method for compressing, said step of obtaining approximations comprises substeps of:

- selecting B subsequent sets of D subsequent indices indexing said B elements of data;
- obtaining current elements equal to B subsequent sections of the first tensor core at each first index of said B subsequent sets;
- initializing a first permutation of B elements, hereafter "current forward permutation", as the identity permutation;
- initializing a second permutation of B elements, hereafter "current backward permutation", as the identity permutation;

and comprises, for k ranging from 2 to D, iterations of the following substeps:

- permuting the $k^{th}$ indices of said B subsequent sets with said current forward permutation;
- determining an intermediate forward permutation as a permutation ordering the permuted $k^{th}$ indices;
- permuting the B subsequent current elements with said intermediate forward permutation;
- determining for each unique value in said $k^{th}$ indices, a group associated to the unique value, this group containing elements of the permuted B subsequent current elements, these elements having the same positions as the indices of an ordered sequence of the $k^{th}$ indices, these indices being equal to the unique value;
- determining subsequent updated elements, by applying, for each said group associated to a said value, a matrix product between a section of the $k^{th}$ tensor core and the elements of this group, this section being at the index equal to the value associated to this group, said matrix product being implemented in parallel for said elements of this group with one instance stored in a memory of said section of the $k^{th}$ tensor core;
- assigning said current elements as said updated elements;
- assigning said current forward permutation as the composition of said intermediate forward permutation with said current forward permutation;
- assigning said current backward permutation as the composition of said current backward permutation with the inverse of said intermediate forward permutation;

and after the last iteration, a step of determining said approximations by permuting said current elements with said current backward permutation.

In this embodiment, the approximations of B data elements are determined by successive iterations of matrix product with sections of subsequent tensor cores. Hence, at each $k^{th}$ iteration, only one instance of each section of the $k^{th}$ tensor cores need to be stored, which enables to decrease the memory storage required for compressing the data compared to the case when both left- and right-hand side operands of B matrix multiplications had to be stored.

At each iteration, initial elements are multiplied (in the sense of matrix product) with sections of tensor cores. In the first iteration, the initial elements are sections of the first tensor core. These initial elements are successively multiplied with sections of the subsequent tensor cores to finally form approximations of the B vector elements of data.

Furthermore, this embodiment advantageously enables to leverage the use of parallel matrix products during the determination of approximation with the tensor cores. By parallel matrix products, one refers to a plurality of matrix product occurring within the same interval of time, each one handled by a separate but similar functional unit. Such parallel computation also enables to speed-up the method and leverage vectorized computation hardware such as GPU (General Processing Unit).

This embodiment also enables to decrease the number of instances of sections of tensor cores that have to be kept in memory for determining the approximation. Hence, this embodiment allows decreasing the memory storage required to perform the compression of data. By instance of a section of tensor core, one refers here to a set of parameters defining this matrix and stored on hardware for performing a matrix product with this matrix.

The parallel computation between one section of tensor core and a plurality of initial elements requires these elements to be aligned subsequently. The proposed embodiment allows the alignments of elements which have to be multiplied with the same section of tensor core thanks to permutations, and hence allows parallel matrix product between this section of tensor cores and these elements.

Parallel matrix product implementation is for example enabled by deep-learning frameworks such as Tensorflow or Pytorch. In order to perform a parallel matrix product between a section of tensor core and a plurality of current elements, this section of tensor can be implemented as a linear layer. This linear layer is then applied to these current elements. Such an operation allows using only one instance of memory of a section of a tensor core for performing a matrix product of this section and a plurality of initial elements.

According to a particular embodiment, each $k^{th}$ tensor core of said D subsequent tensor cores has a shape $R_{k-1} \times M_k \times R_k$, with k between 1 and D and $R_k$ verifying:

- $R_0 = 1$; and

$$R_k = \min\left(\prod_{j=1}^{k} M_j, R_D \prod_{j=k+1}^{D} M_j, R_{max}\right) \text{ for k between 1 and D-1,}$$

with $R_{max}$ being a predetermined number as a function of an approximation criterion greater than or equal to $R_D$.

This embodiment proposes to determine shapes of the tensor cores by making a trade-off between theoretical conditions on tensor cores shapes for optimal tensor train decomposition, and a limitation of their size. These theoretical conditions $R_k = \min\left(\prod_{j=1}^{k} M_j, R_D \prod_{j=k+1}^{D} M_j\right)$ (see Holtz and al., 2012, "On manifolds of tensors of fixed TT-rank") ensure that the tensor train decomposition can provide an accurate approximation of the data. It has been observed that clamping the size of the tensor cores with a given number ($R_{max}$) not less than $R_D$, as claimed, can still maintain the precision reached by the tensor cores.

Hence, this embodiment advantageously enables to decrease the memory storage required to compress the data by maintaining a similar precision of the compression of the data.

According to a particular embodiment, said number D and a number M are determined such that $M^D$ is equal to the number of said vector elements of said array of data, and wherein $M_k$ is equal to $M$, for k between 1 and D.

As detailed below, this embodiment is particularly advantageous in the case of a grid radiance field with spatial dimensions equal to a power of some prime number such as 2, e.g., $2^D$, which makes up for a (D+1)-dimensional hierarchical space.

For instance, if the data is a grid radiance field comprising $512^3$ voxels, it can be approximated with 9 tensor cores each having a mode axis of size 8, since $512^3 = 8^9$, where k-th mode of size 8 encodes a k-th level of a hierarchy of three-dimensional spaces each of size 2x2x2 using the so-called Morton code, or Z-order.

By combining this embodiment with the previous embodiment, for compressing such grid radiance fields, it has been observed that the size of the tensor cores can be further reduced without degrading significantly the precision of the compression.

Furthermore, the inventors have observed that in the case of compressing grid radiance fields, the above embodiment is not as sensitive to the content (scene) orientation as prior art. In particular, compared to prior art (Chen et al, 2022, "TensoRF: Tensorial Radiance Fields"), for a scene comprising axis-aligned elements, compressing a radiance field using the above embodiment leads to a much less degraded quality when switching from compressing the axis-aligned scene to compressing rotations of the same scene. An object in the scene is said axis-aligned if it is composed of a dominating number of mesh faces parallel to the axes of the frame of reference used to encode the grid, which is the property of a scene in relation to the chosen frame of reference. Things are often axis-aligned in man-made structures. For instance, houses are often aligned either parallel or perpendicular to a street, or to each other.

According to second aspect, the invention proposes a computer-implemented method for decompressing a multi-dimensional array of data compressed according to any embodiment of the method for compressing, said array of data comprising a plurality of vector elements having the same number R of scalar elements, the method comprising obtaining D subsequent tensor cores forming a Tensor Train Decomposition such that:

- said subsequent tensor cores require less memory storage than said data,
- each $k^{th}$ tensor core of said D subsequent tensor cores having two said rank axes of size $R_{k-1}$ and $R_k$, with k between 1 and D, $R_0=1$ and $R_D=R$, the size of said rank axes defining the degree of data approximation precision,
- each $k^{th}$ tensor core of said D subsequent tensor cores having a said mode axis of size $M_k$, with k between 1 and D,
- each vector element is indexed by D subsequent indices and is approximated by a product of D sections, at said subsequent indices, of said subsequent tensor cores,
- a section at index $i_k$ of a $k^{th}$ core of said D subsequent tensor cores is the $i_k^{th}$ section of this core along its mode axis, with $i_k$ between 1 and $M_k$,

said method comprising a step of obtaining approximations of B subsequent vector elements of said array of data by determining matrix product between sections of said tensor cores at indices indexing said B subsequent vector elements.

Correlatively, the invention proposes a device for decompressing a multi-dimensional array of data compressed according to any embodiment of the method for compressing, said array of data comprising a plurality of vector elements having the same number R of scalar elements, the device comprising a module of obtaining D subsequent tensor cores forming a Tensor Train Decomposition such that:

- said subsequent tensor cores require less memory storage than said data,
- each $k^{th}$ tensor core of said D subsequent tensor cores having two said rank axes of size $R_{k-1}$ and $R_k$, with k between 1 and D, $R_0=1$ and $R_D=R$, the size of said rank axes defining the degree of data approximation precision,
- each $k^{th}$ tensor core of said D subsequent tensor cores having a said mode axis of size $M_k$, with k between 1 and D,
- each vector element is indexed by D subsequent indices and is approximated by a product of D sections, at said subsequent indices, of said subsequent tensor cores,
- a section at index $i_k$ of a $k^{th}$ core of said D subsequent tensor cores is the $i_k^{th}$ section of this core along its mode axis, with $i_k$ between 1 and $M_k$,

said device comprising a module of obtaining approximations of B subsequent vector elements of said array of data by determining matrix product between sections of said tensor cores at indices indexing said B subsequent vector elements.

According to a particular embodiment of the method for decompressing, said step of obtaining approximations comprises substeps of:

- selecting B subsequent sets of D subsequent indices indexing said B elements of data;
- obtaining current elements equal to B subsequent sections of the first tensor core at each first index of said B subsequent sets;
- initializing a first permutation of B elements, hereafter "current forward permutation", as the identity permutation;
- initializing a second permutation of B elements, hereafter "current backward permutation", as the identity permutation;

and comprises, for k ranging from 2 to D, iterations of the following substeps:

- permuting the $k^{th}$ indices of said B subsequent sets with said current forward permutation;
- determining an intermediate forward permutation as a permutation ordering the permuted $k^{th}$ indices;
- permuting the B subsequent current elements with said intermediate forward permutation;
- determining for each unique value in said $k^{th}$ indices, a group associated to the unique value, this group containing elements of the permuted B subsequent current elements, these elements having the same positions as the indices of an ordered sequence of the $k^{th}$ indices, these indices being equal to the unique value;
- determining subsequent updated elements, by applying, for each said group associated to a said value, a matrix product between a section of the $k^{th}$ tensor core and the elements of this group, this section being at the index equal to the value associated to this group, said matrix product being implemented in parallel for said elements of this group with one instance stored in a memory of said section of the $k^{th}$ tensor core;
- assigning said current elements as said updated elements;
- assigning said current forward permutation as the composition of said intermediate forward permutation with said current forward permutation;
- assigning said current backward permutation as the composition of said current backward permutation with the inverse of said intermediate forward permutation;

and after the last iteration, a step of determining said approximations by permuting said current elements with the said current backward permutation.

The invention also provides a computer program comprising instructions for performing the steps of the method according to any of the above-described embodiments when said program is executed by a computer.

It should be noted that the computer programs referred to in this paper may use any programming language, and be in the form of source code, object code, or code intermediate between source code and object code, such as in a partially compiled form, or in any other desirable form.

The invention provides storage medium, readable by computer equipment, of a computer program comprising instructions for executing the steps of the method according to one of the embodiments described above.

The storage media referred to in this statement may be any entity or device capable of storing the program and being played by any computer equipment, including a computer. For example, the medium may include a storage medium, or a magnetic storage medium, such as a hard drive. Alternatively, the storage media may correspond to a computer integrated circuit in which the program is incorporated and adapted to execute a method as described above or to be used in the execution of such method.

Brief description of the drawings

Further features and advantages of the present disclosure will become apparent from the following description of certain embodiments thereof, given by way of illustration only, not limitation, with reference to the accompanying drawings in which:

Figure 1 represents the steps of a method for compressing data according to an embodiment;
Figure 2A illustrates a tensor-network representation of a tensor train decomposition according to a first embodiment;
Figure 2B illustrates a tensor-network representation of a tensor train decomposition according to a second embodiment;
Figure 3 represents substeps of the step of determining approximation, according to an embodiment;
Figure 4 represents the steps of a method for decompressing data according to an embodiment;
Figure 5 represents the functional architecture of a device for compressing data according to an embodiment;
Figure 6 represents the functional architecture of a device for decompressing data according to an embodiment;
Figure 7 represents the hardware architecture of a device for compressing data according to an embodiment;
Figure 8 represents the hardware architecture of a device for decompressing data according to an embodiment; and
Figure 9 shows score of rendering images of a three-dimensional scene using a compressed radiance field according to an embodiment.

Description of embodiments

In the description hereafter, the invention is used to compress data representing a radiance field on a grid. This particular embodiment is used as an example and does not limit the invention in any way. In particular, the invention can also be applied to other types of data such as any vector space defined on a multi-dimensional rectangular lattice (multi-dimensional array). Examples include but are not limited to: large matrices such as seen in Recommender Systems, or any multi-variable function that can be evaluated on the said lattice.

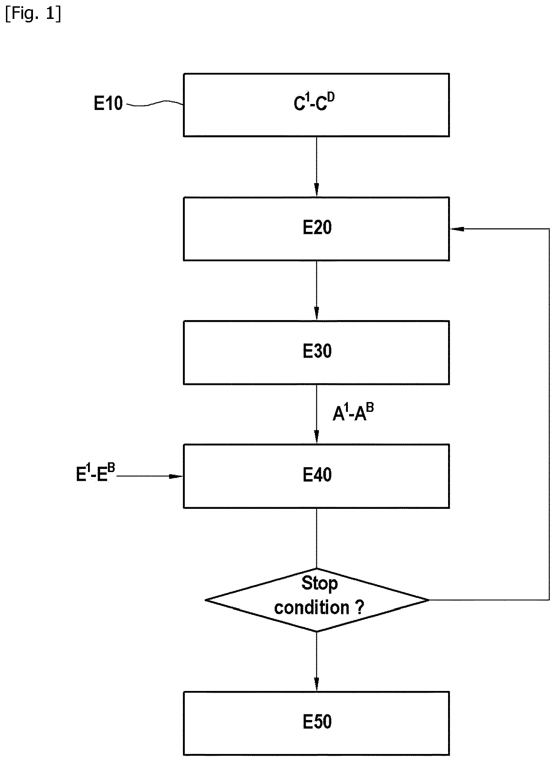

Figure 1 represents the main steps E10, E20, E30, E40, and E50 of the method for compressing data according to a particular embodiment.

In a step E10 of the method, a sequence of D subsequent tensor cores $C^1$, $C^2$ ... $C^D$ are obtained, with D being an integer corresponding to the dimensionality of the grid, or the number of function arguments. For instance, D may be equal to 3 in case of representing grid radiance field, or D in case of representing grid radiance field with axes of sizes $2^D$ as a hierarchical space). These tensor cores, also called TT-cores, form a block tensor train decomposition of a tensor A, whose vector elements correspond one by one to the elements of the data to compress or multi-variable function to evaluate. In particular, each vector element of A is an approximation of a vector element of data.

The terms 'tensor', 'multi-dimensional array', and '$N$-dimensional array' are used interchangeably.

In the example described here, the data is a three-dimensional grid radiance field, each element of data being a vector element (or voxel) composed of R scalar values enabling to render the scene at the position of this voxel. For instance, these R scalar values are values of second order spherical harmonics coefficients for each color of the RGB representation, and an additional value of optical density. In this case, R is equal to 28 (9 spherical harmonic coefficients for each color and one optical density value).

Mathematically, the Tensor Train Decomposition (Oseledets, 2011, "Tensor-Train Decomposition") of a $N$-dimensional array represents it using N smaller three-dimensional tensors, called TT-cores. In our case, we apply a variant of TTD called the Block Tensor Train Decomposition (Dolgov et.al., 2013, 'Computation of Extreme Eigenvalues in Higher Dimensions Using Block Tensor Train Format'), to *D*-dimensional arrays (tensor *A* sliced along the last dimension), representing columns of *A*, and attach a block-index to the last TT-core. It can be written in the element-wise notation as follows (referred to hereinafter as 'TENSOR TRAIN'):

$$A(i_1, i_2, \ldots, i_D, r) = \sum_{\beta_0=1}^{R_0} \sum_{\beta_1=1}^{R_1} \ldots \sum_{\beta_{D-1}=1}^{R_{D-1}} C^1(\beta_0, i_1, \beta_1) \, C^2(\beta_1, i_2, \beta_2) \ldots C^D(\beta_{D-1}, i_D, r)$$

(1)

where tensors $C^1$, $C^2$ ... $C^D$ with respective shapes $R_0 \times M_1 \times R_1$, $R_1 \times M_2 \times R_2$, ... , $R_{D-1} \times M_D \times R_D$ are the TT-cores, and $R_0$, $R_1$, $R_2$ ..., $R_D$ are called the TT-ranks. The last TT-rank $R_D$ is equal to R, i.e. the size of a vector element of data. The first and third axis of a tensor core $C^k$ have respective length $R_{k-1}$ and $R_k$, and the second axis, hereafter called the mode axis, is of length $M_k$. By convention, the value of $R_0$ is equal to 1 such that the first tensor core $C^1$ is equivalent to a matrix of shape $M_1 \times R_1$, however the first unary dimension is kept for the convenience of algorithms and formulations enclosed in the invention.

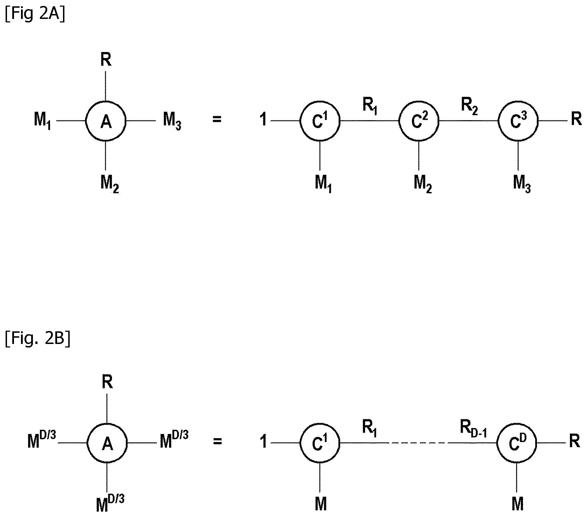

The figures 2A and 2B represent the above equation with different values of D and $M_k$, in a tensor network format. It is reminded that a 'tensor network' is a graphical notation for the representation of tensor products, such as the TTD parameterization, where each of the tensor components on the right part of the equation is represented with a circle node with the number of legs, corresponding to the number of dimensions of the component tensor. Connected legs between a pair of tensors represent the operation of product and summation along the connected dimension, which corresponds to the sum operator in the equation's right part.

The TT-ranks correspond to the degree of approximation of the data by the tensor train decomposition. This means that lowering values of TT-ranks generally (i) decreases the memory occupied by the tensor cores, hence increases the degree of compression of the data, and (ii) decreases the maximum precision of the approximation of the data that the tensor train decomposition can achieve.

In embodiments, the maximal TT-ranks resulting from such Block Tensor Train Decomposition are defined as follows: $R_k^{max} = \min\left(\prod_{j=1}^{k} M_j, R_D \prod_{j=k+1}^{D} M_j\right)$, for *k* = 1, ..., *D* - 1 and $R_0^{max} = 1$, $R_D^{max} = R_D$ ; such values are consistent with the mathematical properties of TTD to have an infinite degree of approximation (absolutely precise). For instance, if $M_k$ is equal to 8 for all k between 1 and D, D is equal to 8, and the block TT dimension $R = R_D$ is equal to 3, $R_0^{max}, R_1^{max}, R_2^{max}, R_3^{max}, R_4^{max}, R_5^{max}, R_6^{max}, R_7^{max}, R_8^{max}$ are respectively equal to 1, 8, 64, 512, 4096, 1536, 192, 24, and 3.

The values of the TT-ranks may be lower than these above defined values but still enabling to obtain an adequate accuracy of approximation with respect to a particular use of the compressed data.

In embodiments, to achieve lossy approximation and compression, the TT-ranks $R_k$ are chosen in the range $1 \leq R_k \leq \min(R_k^{max}, R_{max})$, with $R_{max}$ being a predetermined integer number. For instance, choosing $R_{max}$=256 and the same example values of $M_k$=8 and D=8, the value of $R_0$, $R_1$, $R_2$, $R_3$, $R_4$, $R_5$, $R_6$, $R_7$, $R_8$ can be chosen respectively equal to to 1, 8, 64, 256, 256, 256, 192, 24, and 3. In this case, the size of the tensor cores $C^3$, $C^4$, $C^5$ and $C^6$ are clamped which enables to save memory storage.

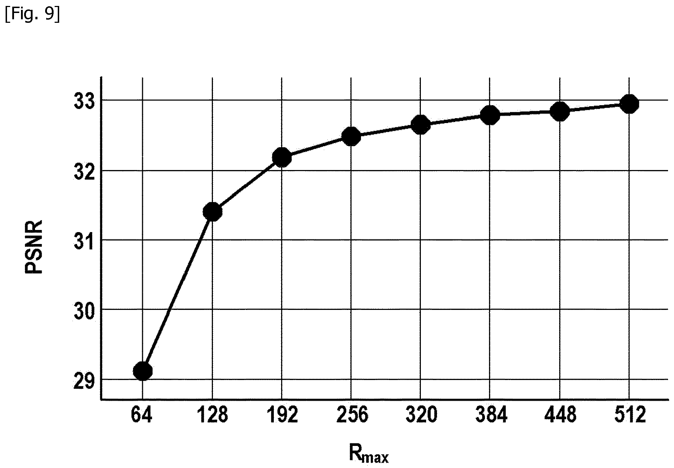

Figure 9 shows an accuracy score of rendering images of a three-dimensional scene using a compressed radiance field according to the above described embodiment. The y-axis corresponds to the score PSNR (Peak Signal-to-Noise Ratio) which quantifies reconstruction quality for images. The x-axis corresponds to the value of $R_{max}$. In this example, the radiance field comprises $256^3$ vector elements (voxels) each storing a vector of 28 scalars, corresponding to 9 spherical harmonics per each of the three color channels, and one optical density value. The parameters of the tensor cores used for the compression of the radiance field are $M_k$=8 and D=8 and R=28. In figure 9, the PSNR score does not significantly improve if $R_{max}$ is increased above 256. This figure hence shows that clamping the size of the tensor cores with $R_{max}$ equal to 256 does not significantly decrease the quality of the compression.

In order to simplify notations, the tensor train decomposition is hereafter written:

$$A(i_1, i_2, \ldots, i_D, :) = C^1(:, i_2, :) \cdot C^2(:, i_2, :) \cdot \ldots \cdot C^D(:, i_D, :) \quad (2)$$

where $A(i_1, i_2, ..., i_D, :)$ is the approximation of the vector element of the data indexed with subsequent indices $(i_1, i_2, ..., i_D)$, and $C^k(:, i_k, :)$ is a section at index $i_k$ along the mode axis of the tensor core $C^k$. Hence $C^k(:, i_k, :)$ is a matrix of shape $R_{k-1} \times R_k$. Also, $C^k(:, i_k, :) \cdot C^{k+1}(:, i_{k+1}, :)$ is a matrix product between the section $C^k(:, i_k, :)$ of shape $R_{k-1} \times R_k$ and the section $C^{k+1}(:, i_{k+1}, :)$ of shape $R_k \times R_{k+1}$, resulting in a matrix of shape $R_{k-1} \times R_{k+1}$. Consequently, the train of matrix product $C^1(:, i_2, :) \cdot C^2(:, i_2, :) \cdot ... \cdot C^D(:, i_D, :)$ results in a matrix of shape $R_0 \times R_D$ which is equivalent to a vector of size $R_D$.

Given the structure of the data to be compressed, different shapes of the tensor cores (in particular the numbers D and $M_k$) may be chosen. Two examples of shape of tensor cores of a tensor train decomposition are represented in figure 2A and figure 2B.

For instance, in an embodiment wherein data is a grid radiance field of shape $X \times Y \times Z \times R$, D is equal to 3, which corresponds to the 3 spatial dimensions of the radiance field, and $M_1 = X$, $M_2 = Y$, and $M_3 = Z$ (e.g. $M_1 = M_2 = M_3 = 256$ for a radiance field of $256^3$ voxels). This embodiment is represented on figure 2A.

In another embodiment, data is a radiance field on a cubic grid, of shape $X^3 \times R$ such that X is a power of 2 (e.g. 256). In this another embodiment, D is such that $X = 2^D$, and the 3-dimensional space is treated as a hierarchical space with D levels of hierarchy, each level encoding 8 sub-spaces corresponding to the 2x2x2 cube enclosing subsequent levels, where, for this reason, $M_k$ are all equal to M=8. This embodiment is represented on figure 2B.

In embodiments, the tensor cores $C^1$-$C^D$ are obtained is step E10 by randomly initializing their values. For instance, in embodiments, each value of the tensor cores is sampled from a normal distribution with a zero mean and a variance equal to $\exp\left(\left(2\ln s - \sum_{j=1}^{D} \ln R_j\right)/D\right)$, whit $s$ being a fixed positive number defining the standard deviation of the initial values of tensor A (equation 2). For instance, $s$ is equal to 1.

In other embodiments, the values of the tensor cores $C^1$-$C^D$ are initialized using the output of any of the SVD-based method. This enables to speed up the convergence and reduces the number of training iterations of the tensor cores.

After obtaining the tensor cores $C^1$-$C^D$, the approximations of data elements provided by the tensor train decomposition is random (if values of tensor cores are randomly initialized) or can at least be improved (i.e. their accuracy can be increased). The iterations of steps E20, E30 and E40 aim to modify the tensor core values in order to improve the approximations of data by the tensor train decomposition.

At each iteration, the current tensor cores are obtained in step E20 and used in the following steps of this iteration. If this is the first iteration, the current tensor cores are the tensor cores obtained in step E10. Otherwise, the current tensor cores are the tensor cores such as modified in step E40 of the previous iteration.

In step E30, a batch of B vector elements of data $E^1$-$E^B$ are selected and approximated with the tensor cores obtained in step E20. Each element of data is approximated by a product of D sections of the tensor cores $C^1$-$C^D$ as in equation 2.

In an embodiment, this is implemented by obtaining D sections of tensor cores for each of the B elements to be approximated and performing the matrix products with each of the sequences of D sections. This implementation requires to store the B*D sections (matrices).

In another embodiment, the matrix products are performed sequentially.

In an embodiment, the sections of tensor cores are implemented as linear layers and the matrix products are computed by means of applying the linear layers while maintaining operands order through permutations as discussed previously, also detailed later in the description.

In an embodiment, parallel implementation of matrix product is leveraged as well. This embodiment is detailed later in the description.

The step E30 results in the subsequent approximations $A^1$-$A^B$ of the B subsequent elements $E^1$-$E^B$.

In step E40, the values of the section of the tensor cores $C^1$-$C^D$ are modified based on the data vector elements $E^1$-$E^B$ and their approximations $A^1$-$A^B$. In particular, these sections are updated using an algorithm of gradient descent which aims to minimize an approximation error between the elements $E^1$-$E^B$ and their approximations $A^1$-$A^B$.

In an embodiment where B is smaller than the number of vector elements, a variant of stochastic gradient descent can be employed, herein referred to as 'gradient descent' or 'optimizer'.

To do this, the gradients of the approximation error are evaluated. These gradients are evaluated with respect to the values of the section of the tensor cores. Then, the sections are updated using the evaluated gradients. In particular, in the case of a gradient descent algorithm, the parameters are updated by subtracting the value of the evaluated gradient multiplied by a positive real coefficient. Thus, a gradient descent algorithm aims to minimize the error approximation.

In an embodiment, the approximation error is an L1 error, i.e. a sum of absolute values of the differences between the data elements and their approximation: $L1 = \sum_{i=1}^{B} \sum_{r=1}^{R} \left| E_r^i - A_r^i \right|$, where $E_r^i$ and $A_r^i$ are the $r^{th}$ values of the data vector element $E^i$ and its approximation $A^i$, respectively.

In an embodiment, the approximation error is an L2 error, i.e. a sum of absolute values of the differences between the data vector elements and their approximation: $L2 = \sum_{i=1}^{B} \sum_{r=1}^{R} \left| E_r^i - A_r^i \right|^2$ .

The choice of the approximation error is not limiting the invention as other type of approximation error can be used in other embodiments.

L2 error is particularly adapted for compressing data with Gaussian noise such as image data. L1 error is adapted for data with Laplace noise.

At the end of an iteration of steps E20-E40, either the iterations end if a given condition if met, or a next iteration is performed if it is not. For instance, in embodiments, this condition is the exceeding of a given number of iterations. In other embodiments this condition may also be that an approximation error, determined after the iteration of step E40 on a held-out validation set, falls below a certain threshold.

After the end of the iterations, the modified tensor cores $C^1$-$C^D$ forming a compression of the data are obtained in step E50.

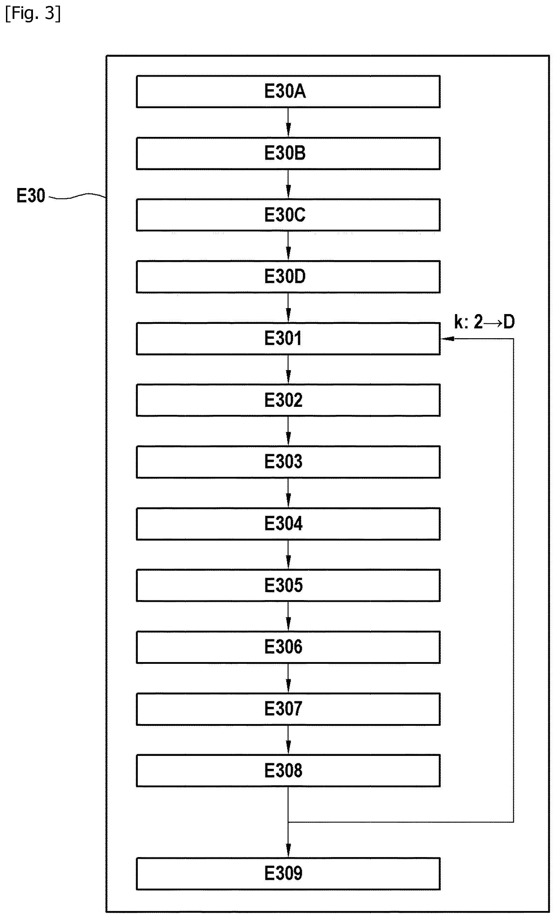

Figure 3 represents substeps of the step E30 of obtaining approximations $A^1$-$A^B$ of vector elements $E^1$-$E^B$ of the data, according to a particular embodiment.

In this embodiment, the step E30 comprises four first substeps:

- a substep E30A of selecting B subsequent sets of D subsequent indices respectively indexing said B subsequent vector elements $E^1$-$E^B$ of a multi-dimensional array of data; and
- a substep E30B of obtaining current elements v equal to B subsequent sections of the first tensor core $C^1$ at each first index of said B subsequent sets.
- initializing E30C a said forward permutation $\pi$ of B elements as the identity permutation;
- initializing E30D a said backward permutation $\sigma$ of B elements as the identity permutation;

Each element of the B subsequent elements is approximated by a product of D subsequent sections of the tensor cores $C^1$-$C^D$, as show in equations 1 or 2. This can be implemented as successive products, starting from the section of the first tensor core $C^1$, which is multiplied by a section of the second tensor core $C^2$, then the result of this product is multiplied with a section of the third tensor $C^3$, and so on until a product such as depicted in equation 1 or 2 is determined.

The substep E30B initiate such a determination of B approximations $A^1$-$A^B$ of the B elements $E^1$-$E^B$ by obtaining the B sections of the first tensor core.

The substep E30C initiates the forward permutation $\pi$ which will be used in the following steps to align elements in order to perform a parallel matrix product on these elements.

The substep E30D initiates the backward permutation $\sigma$ that will be used such that the order of the approximations $A^1$-$A^B$ is the same as the B subsequent vector elements $E^1$-$E^B$.

In the successive iterations of substeps E301-E308, the products of subsequent sections of the tensor cores $C^1$-$C^D$ are performed iteratively to determine the approximations $A^1$-$A^B$.

These iterations are repeated for k ranging from 2 to D inclusively.

In substep E301, the $k^{th}$ indices $i_k^1$-$i_k^B$ of said B subsequent sets are permuted using the current forward permutation $\pi$. This forward permutation is the identity in the first iteration and is changed at the end of each iteration in order to align adequately the B subsequent sets during the substep E301 of the next iteration.

In substep E302 an intermediate forward permutation $\pi^a$ is determined as a permutation ordering the indices permuted in the substep.

In substep E303 the B subsequent initial elements v are permuted with said intermediate permutation $\pi^a$.

In substep E304, for each unique value m in said $k^{th}$ indices $i_k^1$-$i_k^B$, a group $v_m$ associated to the unique value m is determined. In particular, this group $v_m$ contains elements of the permuted B subsequent initial elements $\pi^a(v)$ obtained in substep E303. Also, the permuted elements in the group $v_m$ have the same positions as the m-valued indices of the ordered sequence of the $k^{th}$ indices $\pi^a\left(i_k^1 - i_k^B\right)$ . By positions, one refers here to the positions in the sequence of B permuted elements or the position in the sequence of B ordered indices $\pi^a\left(i_k^1 - i_k^B\right)$ . As an example, the element b in the subsequent elements (a, b, c, d) has the same position as the index with value 4 in the sequence of indices (3,4,4,6).

In substep E305, subsequent updated elements v' are determined by applying, for each said group $v_m$, a matrix product between a section of the $k^{th}$ tensor core $C^k$ and the elements of this group $v_m$, this section being at the m-valued index. This matrix product is implemented in parallel for all elements of $v_m$, and uses one instance stored in a memory of said section of the k$^{th}$ tensor core C$^k$. In this embodiment, the matrix product is implemented using a linear layer function which supports backpropagation, which allows performing parameter updates with gradient descent. This parallel computation and the usage of linear layer functionality are possible thanks the permuting and grouping of the elements of v$_m$.

In substep E306, the current elements v become equal to the updated elements v' determined in previous substep E305.

In substep E307, an updated forward permutation is determined as the composition $\pi^a \cdot \pi$ of said intermediate forward permutation $\pi^a$ with the current forward permutation $\pi$. The current forward permutation $\pi$ then becomes equal to this updated forward permutation.

In substep E308, an updated backward permutation is determined as the composition $\sigma \cdot \pi^{a-1}$ of the current backward permutation $\sigma$ with the inverse $\pi^{a-1}$ of said intermediate forward permutation $\pi^a$. The current backward permutation $\sigma$ then becomes equal to this updated backward permutation.

After the last iteration of substeps E301-E308, a step E309 determines the approximations A$^1$-A$^B$ of the respective elements of data E$^1$-E$^B$. These subsequent approximations are respectively equal to the subsequent updated elements permuted with the updated backward permutation determined in the last iteration of substep E308.

In order to illustrate the above described embodiment, hereafter is presented a simplified example. In this example, D = 3, B = 4, and the B subsequent sets of subsequent indices are: (4; 6; 3), (3; 5; 3), (4; 3; 5) and (1; 3; 2).

The obtained initial elements v in the substep E30B are the following set of sections of the first tensor core C$^1$: C$^1$(:,4,:); C$^1$(:,3,:); C$^1$(:,4,:); C$^1$(:,1,:), taking sections at each of the first indices (4; 3; 4; 1) of the B sets. Since D=3, two iterations of the substeps E301 to E308 are realized. The first iteration of the substeps E301 to E308 is detailed below.

In this first iteration, the current forward permutation $\pi$ is equal to the identity, hence the permuting E301 of the second indices (6; 5; 3; 3) with the current forward permutation $\pi$ has no effect. The current backward permutation $\sigma$ is also equal to the identity in the first iteration.

In the substep E302, the intermediate forward permutation $\pi^a$ is determined as a permutation which orders the subsequent indices (6; 5; 3; 3), i.e. a permutation which enables to transform the sequence (6; 5; 3; 3) into (3; 3; 5; 6). Such a permutation is for instance the permutation which sends the index 6 from the first to the fourth position, the index 5 from the second to the third position, the index 3 from the third to the first position and the index 3 from the fourth to the second position.

In substep E303, the initial elements v are permuted with the intermediate permutation $\pi^\alpha$, which yields, according to the previous paragraph: C$^1$(:,4,:); C$^1$(:,1,:); C$^1$(:,3,:); C$^1$(:,4,:)

In substep E304, the sections in of the initial elements v are grouped with respect to each unique value in the ordered sequence of indices (3; 3; 5; 6). In particular:

- the elements C$^1$(:,4,:) and C$^1$(:,1,:) have the same positions as the indices with values equal to 3 in the ordered sequence (3; 3; 5; 6), and hence form the group v$_3$ associated to the value 3,
- the element C$^1$(:,3,:) has the same position as the index with value equal to 5 in the ordered sequence (3; 3; 5; 6), and hence form the group v$_5$ associated to the value 5,
- the element C$^1$(:,4,:) has the same position as the index with value equal to 6 in the ordered sequence (3; 3; 5; 6), and hence form the group v$_6$ associated to the value 6.

In substep E305, for each group v$_m$, a section at m-valued index of the second tensor core C$^2$ is multiplied (in the sense of a matrix product) with each of the elements of this group to determine updated elements. In particular:

- the section C$^2$(:,3,:) of the tensor core C$^2$ is multiplied with the elements of the group v$_3$, resulting in the updated elements C$^1$(:,4,:)·C$^2$(:,3,:) and C$^1$(:,1,:)·C$^2$(:,3,:);
- the section C$^2$(:,5,:) is multiplied with each of the elements of the group v$_5$, resulting in the updated element C$^1$(:,3,:)·C$^2$(:,5,:);
- the section C$^2$(:,6,:) is applied to the elements of the group v$_5$, resulting in the updated element C$^1$(:,4,:)·C$^2$(:,6,:).

The subsequent updated elements v' determined in the substep E305 hence form the sequence C$^1$(:,4,:)·C$^2$(:3,:); C$^1$(:,1,:)·C$^2$(:3,:); C$^1$(:,3,:)·C$^2$(:,5,:); C$^1$(:,4,:)·C$^2$(:,6,:).

In substep E306, the current elements v are assigned as the updated elements v'. Hence the current elements v respectively become equal to C$^1$(:,4,:)·C$^2$(:3,:); C$^1$(:,1,:)·C$^2$(:,3,:); C$^1$(:,3,:)·C$^2$(:,5,:); and C$^1$(:,4,:)·C$^2$(:,6,:).

In substep E307, an updated forward permutation $\pi^a \cdot \pi$ is determined by composing the intermediate permutation $\pi^a$ with the current forward permutation $\pi$. Since $\pi$ is equal to the identity, this updated permutation is equal to $\pi^a$. Then the current forward permutation $\pi$ then becomes equal to $\pi^a$.

In substep E308, an updated backward permutation $\sigma \cdot \pi^{a-1}$ is determined by composing the current backward permutation $\sigma$ with the inverse $\pi^{a-1}$ of the intermediate permutation $\pi^a$. Since $\sigma$ is equal to the identity, the updated backward permutation is equal to $\pi^{a-1}$. Then the current backward permutation $\sigma$ then becomes equal to $\pi^{a-1}$. The second iteration of the substeps E301 to E308 is detailed below.

In the substep E301, the sequence (3; 3; 5; 2) of the third indices is permuted with the initial permutation $\pi$, which yields the sequences of permuted indices (5; 2; 3; 3).

In the substep E302, the intermediate permutation $\pi^a$ is determined as a permutation which orders the subsequent of permuted indices (5; 2; 3; 3), i.e. a permutation which enables to transform the sequence (5; 2; 3; 3) into (2; 3; 3; 5). Such a permutation is for instance the permutation which sends the index 5 from the first to the fourth and last position, the index 2 from the second to the first position and the index 3 from the fourth to the second position.

In substep E303, the current elements v are permuted with the intermediate permutation $\pi^a$, which yields the sequence $C^1(:,1,:)\cdot C^2(:,3,:)$; $C^1(:,4,:).C^2(:,6,:)$; $C^1(:,3,:)\cdot C^2(:,5,:)$;. $C^1(:,4,:)\cdot C^2(:,3,:)$

In substep E304, the sections in of the current elements v are grouped with respect to each unique value in the ordered sequence of indices (2; 3; 3; 5). In particular:

- the element $C^1(:,1,:)\cdot C^2(:,3,:)$ has the same position than the index with value equal to 2 in the ordered sequence (2; 3; 3; 5), and hence form the group $v_2$ associated to the value 2,
- the elements $C^1(:,4,:)\cdot C^2(:,6,:)$ and $C^1(:,3,:)\cdot C^2(:,5,:)$ have the same positions than the indices with values equal to 3 in the ordered sequence (2; 3; 3; 5), and hence form the group $v_3$ associated to the value 3,
- the element $C^1(:,4,:)\cdot C^2(:,3,:)$ has the same position than the index with value equal to 5 in the ordered sequence (2; 3; 3; 5), and hence form the group $v_5$ associated to the value 5.

In substep E305, for each group $v_m$, a section at m-valued index of the 3$^d$ tensor core $C^3$ is multiplied with each of to the elements of this group to determine updated elements. In particular:

- the section $C^3(:,2,:)$ of the tensor core $C^3$ is multiplied with the element of the group $v_2$, resulting in the updated element $C^1(:,1,:)\cdot C^1(:,3,:)\cdot C^3(:,2,:)$;
- the section $C^3(:,3,:)$ is multiplied with each of the elements of the group $v_3$, resulting in the updated elements $C^1(:,4,:)\cdot C^2(:,6,:)\cdot C^3(:,3,:)$ and $C^1(:,3,:)\cdot C^2(:,5,:)\cdot C^3(:,3,:)$;
- the section $C^3(:,5,:)$ is multiplied with the elements of the group $v_5$, resulting in the updated element $C^1(:,4,:)\cdot C^2(:,3,:)\cdot C^3(:5,:)$.

The subsequent updated elements v' determined in the substep E305 hence form the sequence $C^1(:,1,:)\cdot C^2(:,3,:)\cdot C^3(:,2,:)$; $C^1(:,4,:)\cdot C^2(:,6,:)\cdot C^3(:,3,:)$; $C^1(:,3,:)\cdot C^2(:,5,:)\cdot C^3(:,3,:)$; $C^1(:,4,:)\cdot C^2(:,3,:)\cdot C^3(:,5,:)$.

In substep E306, the current elements v are assigned as the updated elements v'. Hence the current elements v respectively become equal to $C^1(:,1,:)\cdot C^2(:,3,:)\cdot C^3(:,2,:)$; $C^1(:,4,:)\cdot C^2(:,6,:)\cdot C^3(:,3,:)$; $C^1(:,3,:)\cdot C^2(:,5,:)\cdot C^3(:,3,:)$; and $C^1(:,4,:)\cdot C^2(:,3,:)\cdot C^3(:,5,:)$.

In substep E308, the updated backward permutation $\sigma\cdot\pi^{a-1}$ is determined by composing the current backward permutation $\sigma$ with the inverse $\pi^{a-1}$ of the intermediate permutation $\pi^\alpha$. Then the current backward permutation $\sigma$ then becomes equal to this updated backward permutation.

The two iterations of the substeps E301 to E308 being performed, the updated backward permutation is applied to the sequence of updated elements v', which yields the following sequence: $C^1(:,4,:)\text{-}C^2(:,6,:)\text{-}C^3(:,3,:)$; $C^1(:,3,:)\cdot C^2(:,5,:)\cdot C^3(:,3,:)$; $C^1(:,4,:)\cdot C^2(:,3,:)\cdot C^3(:,5,:)$; $C^1(:,1,:)\cdot C^2(:3,:)\cdot C^3(:2,:)$. This is the sequence of approximations of the vector elements of data corresponding to the B subsequent sets of subsequent indices (4; 6; 3), (3; 5; 3), (4; 3; 5) and (1; 3; 2)

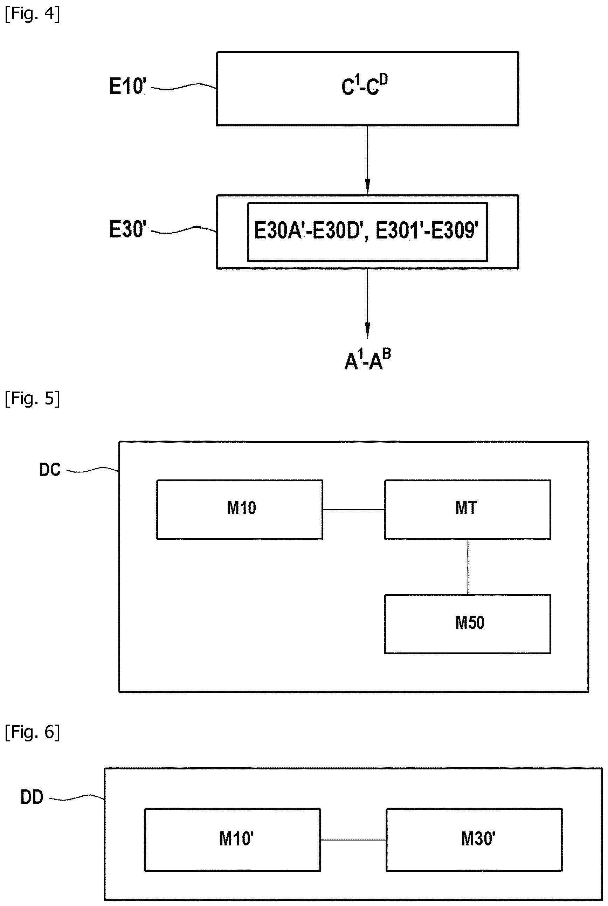

Figure 4 represents the steps for decompressing data according to a particular embodiment.

In step E10', D tensor cores $C^1$-$C^D$ are obtained. These tensor cores have been determined using one of the above described embodiments for compressing data. They constitute a tensor train decomposition providing a compression of the data.

Approximations $A^1$-$A^B$ of data elements $E^1$-$E^B$ are determined from these tensor cores in a step E30'. The approximations $A^1$-$A^B$ provide a decompressed form of elements of data compressed using tensor train decomposition according to the invention.

In an embodiment of the method for decompressing, the matrix products between sections of subsequent tensor cores are performed sequentially such that not all of B*D sections of tensor cores have to be stored at the same time.

In the embodiment represented in figure 4, the step E30' is identical to the step for determining approximations in the method for compressing data, as described above, and namely comprises substeps E30A', E30B', E301'-E308' respectively similar to the substeps E30A, E30B, E301-E308 of the method for compressing described above.

In other embodiments, since the method for decompressing data does not require gradient descent, the usage of Linear layers and hence permutations is not required. In such case, the matrix product performed in the substep E305' is not implemented as the application of a linear layer supporting backpropagation, but as a standard matrix product.

Figure 5 represents the functional architecture of a device DC for compressing data. The device DC comprises:

- a module M10 for implementing step E10 of the method for compressing according to an embodiment;
- a training module MT for implementing a plurality of iterations of the steps E20, E30 and E40 of the method for compressing data according to an embodiment; and
- a module M50 for implementing step E50 of obtaining the compression of data formed by the tensor cores modified by the module MT.

Figure 6 represents the functional architecture of a device DD for decompressing data. The device DD comprises:

• a module M10' for implementing the step E10' of obtaining tensor cores of the method for decompressing according to an embodiment; and
• a training module M30' for implementing the step E30' of the method for decompressing data according to an embodiment.

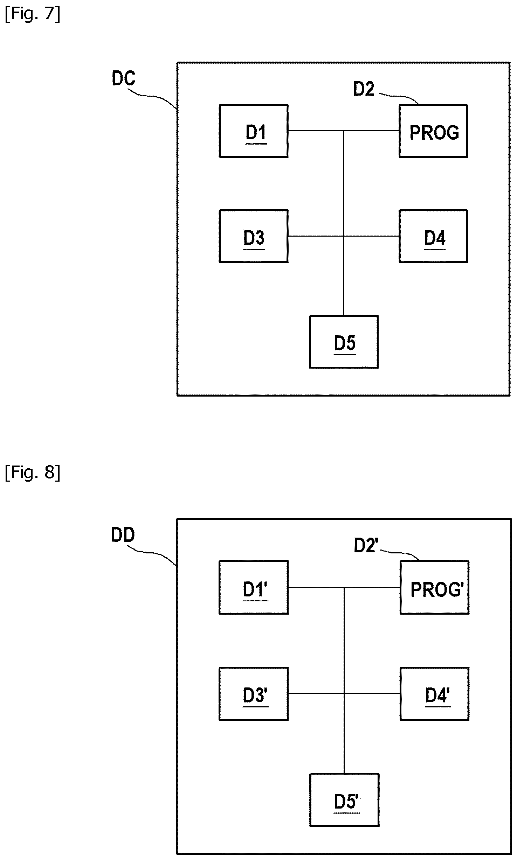

Figure 7 depicts the hardware architecture of a device DC for compressing data according to an embodiment.
In the embodiment described herein, the device DC has a hardware architecture of a computer. In particular, it comprises a processor D1, a read-only memory D2, a random access memory D3, a rewritable non-volatile memory D4 and communication means D5.
The read-only memory D2 of the device DC constitutes a storage medium in accordance with the invention, readable by the processor D1 and on which is stored a computer program PROG in accordance with the invention, this program comprising instructions for executing the steps of a prediction method in accordance with the invention described previously with reference to Figure 1 in an embodiment.
The computer program PROG defines functional modules of the device DC shown in Figure 5.
Figure 8 depicts the hardware architecture of a device DD for decompressing data according to an embodiment.
In the embodiment described herein, the device DD has a hardware architecture of a computer. In particular, it comprises a processor D1', a read-only memory D2', a random access memory D3', a rewritable non-volatile memory D4' and communication means D5'.
The read-only memory D2' of the device DD constitutes a storage medium in accordance with the invention, readable by the processor D1' and on which is stored a computer program PROG' in accordance with the invention, this program comprising instructions for executing the steps of a prediction method in accordance with the invention described previously with reference to Figure 4 in an embodiment.
The computer program PROG' defines functional modules of the device DC shown in Figure 6.

**Claims**

1.  A computer-implemented method for compressing a multi-dimensional array of data comprising a plurality of vector elements having the same number R of scalar elements, the method comprising obtaining (E10) D subsequent tensor cores ($C^1$-$C^D$) forming a Tensor Train Decomposition such that:

    • said subsequent tensor cores require less memory storage than said array of data,
    • each $k^{th}$ tensor core of said D subsequent tensor cores having two said rank axes of size $R_{k-1}$ and $R_k$, with k between 1 and D, $R_0$=1 and $R_D$=R, the size of said rank axes defining the degree of data approximation precision,
    • each $k^{th}$ tensor core ($C^1$-$C^D$) of said D subsequent tensor cores having a said mode axis of size $M_k$, with k between 1 and D,
    • each vector element is indexed by D subsequent indices and is approximated by a product of D sections, at said subsequent indices, of said subsequent tensor cores ($C^1$-$C^D$),
    • a section at index $i_k$ of a $k^{th}$ core of said D subsequent tensor cores is the $i_k^{th}$ section of this core along its mode axis, with $i_k$ between 1 and $M_k$,

    said method comprising at least one training iteration of said tensor cores, each training iteration comprising following steps of:

    • obtaining (E20) current tensor cores;
    • obtaining (E30) approximations ($A^1$-$A^B$) of B subsequent vector elements ($E^1$-$E^B$) of said array of data by determining matrix product between sections of said tensor cores ($C^1$-$C^D$) at indices indexing said B subsequent vector elements; and
    • modifying (E40) values of said tensor cores with gradient descent, to minimize an approximation error between said B subsequent vector elements (E$^1$-E$^B$) and their obtained approximations (A$^1$-A$^B$),

and a step of obtaining (E50) compression of said array of data from the Tensor Train Decomposition formed by the tensor cores modified after the plurality of iterations.

2. A method according to claim 1, wherein said step of obtaining (E30) approximations comprises substeps of:

• selecting (E30A) B subsequent sets of D subsequent indices indexing said B elements of data;
• obtaining (E30B) current elements (v) equal to B subsequent sections of the first tensor core (C$^1$) at each first index of said B subsequent sets;
• initializing (E30C) a first permutation ($\pi$) of B elements, hereafter "current forward permutation", as the identity permutation;
• initializing (E30D) a second permutation ($\sigma$) of B elements, hereafter "current backward permutation", as the identity permutation;

and comprises, for k ranging from 2 to D, iterations of the following substeps:

• permuting (E301) the k$^{th}$ indices (i$_k$$^1$-i$_k$$^B$) of said B subsequent sets with said current forward permutation ($\pi$);
• determining (E302) an intermediate forward permutation ($\pi^a$) as a permutation ordering the permuted k$^{th}$ indices;
• permuting (E303) the B subsequent current elements with said intermediate forward permutation ($\pi^a$);
• determining (E304) for each unique value (m) in said k$^{th}$ indices (i$_k$$^1$-i$_k$$^B$), a group (v$_m$) associated to the unique value (m), this group (v$_m$) containing elements of the permuted B subsequent current elements ($\pi^a(v)$), these elements having the same positions as the indices of an ordered sequence of the k$^{th}$ indices $\left(\pi^a(i_k^1 - i_k^B)\right)$, these indices being equal to the unique value (m);
• determining (E305) subsequent updated elements (v'), by applying, for each said group (v$_m$) associated to a said value (m), a matrix product between a section of the k$^{th}$ tensor core (C$^k$) and the elements of this group, this section being at the index equal to the value (m) associated to this group (v$_m$), said matrix product being implemented in parallel for said elements of this group with one instance stored in a memory of said section of the k$^{th}$ tensor core (C$^k$);
• assigning (E306) said current elements (v) as said updated elements (v');
• assigning (E307) said current forward permutation ($\pi$) as the composition ($\pi^a \cdot \pi$) of said intermediate forward permutation ($\pi^\alpha$) with said current forward permutation ($\pi$);
• assigning (E308) said current backward permutation ($\sigma$) as the composition ($\sigma \cdot \pi^{a-1}$) of said current backward permutation ($\sigma$) with the inverse ($\pi^{\alpha-1}$) of said intermediate forward permutation;

and after the last iteration, a step (E309) of determining said approximations by permuting said current elements (v) with said current backward permutation ($\sigma$).

3. A method according to any of claims 1 to 2, wherein each k$^{th}$ tensor core (C$^1$-C$^D$) of said D subsequent tensor cores has a shape $R_{k-1} \times M_k \times R_k$, with k between 1 and D and $R_k$ verifying:

• $R_0 = 1$; and
• $$R_k = \min\left(\prod_{j=1}^{k} M_j, R_D \prod_{j=k+1}^{D} M_j, R_{max}\right)$$ for k between 1 and D-1,

with $R_{max}$ being a predetermined number as a function of an approximation criterion greater than or equal to $R_D$.

4. A method according to any of claim 1 to 3, wherein said number D and a number M are determined such that $M^D$ is equal to the number of said vector elements of said array of data, and wherein M$_k$ is equal to $M$, for k between 1 and D.

5. A computer-implemented method for decompressing a multi-dimensional array of data compressed according to a method of any of claims 1 to 4, said array of data comprising a plurality of vector elements having the same number R of scalar elements, the method comprising obtaining (E10') D subsequent tensor cores (C$^1$-C$^D$) forming a Tensor Train Decomposition such that:

• said subsequent tensor cores require less memory storage than said data,
• each $k^{th}$ tensor core of said D subsequent tensor cores having two said rank axes of size $R_{k-1}$ and $R_k$, with k between 1 and D, $R_0$=1 and $R_D$=R, the size of said rank axes defining the degree of data approximation precision,
• each $k^{th}$ tensor core ($C^1$-$C^D$) of said D subsequent tensor cores having a said mode axis of size $M_k$, with k between 1 and D,
• each vector element is indexed by D subsequent indices and is approximated by a product of D sections, at said subsequent indices, of said subsequent tensor cores ($C^1$-$C^D$),
• a section at index $i_k$ of a $k^{th}$ core of said D subsequent tensor cores is the $i_k^{th}$ section of this core along its mode axis, with $i_k$ between 1 and $M_k$,

said method comprising a step of obtaining (E30') approximations of B subsequent vector elements of said array of data by determining matrix product between sections of said tensor cores ($C^1$-$C^D$) at indices indexing said B subsequent vector elements.

**6.** A method according to claim 5, wherein said step of obtaining (E30) approximations comprises substeps of:

• selecting (E30A') B subsequent sets of D subsequent indices indexing said B elements of data;
• obtaining (E30B') current elements (v) equal to B subsequent sections of the first tensor core ($C^1$) at each first index of said B subsequent sets;
• initializing (E30C) a first permutation ($\pi$) of B elements, hereafter "current forward permutation", as the identity permutation;
• initializing (E30D') a second permutation ($\sigma$) of B elements, hereafter "current backward permutation", as the identity permutation;

and comprises, for k ranging from 2 to D, iterations of the following substeps:

• permuting (E301') the $k^{th}$ indices ($i_k^1$-$i_k^B$) of said B subsequent sets with said current forward permutation ($\pi$);
• determining (E302') an intermediate forward permutation ($\pi^a$) as a permutation ordering the permuted $k^{th}$ indices;
• permuting (E303') the B subsequent current elements with said intermediate forward permutation ($\pi^a$);
• determining (E304') for each unique value (m) in said $k^{th}$ indices ($i_k^1$-$i_k^B$), a group ($v_m$) associated to the unique value (m), this group ($v_m$) containing elements of the permuted B subsequent current elements ($\pi^a(v)$), these elements having the same positions as the indices of an ordered sequence of the $k^{th}$ indices

$$\left(\pi^a(i_k^1 - i_k^B)\right)$$ , these indices being equal to the unique value (m);

• determining (E305') subsequent updated elements (v'), by applying, for each said group ($v_m$) associated to a said value (m), a matrix product between a section of the $k^{th}$ tensor core ($C^k$) and the elements of this group, this section being at the index equal to the value (m) associated to this group ($v_m$), said matrix product being implemented in parallel for said elements of this group with one instance stored in a memory of said section of the $k^{th}$ tensor core ($C^k$);
• assigning (E306') said current elements (v) as said updated elements (v');
• assigning (E307') said current forward permutation ($\pi$) as the composition ($\pi^a \cdot \pi$) of said intermediate forward permutation ($\pi^a$) with said current forward permutation ($\pi$);
• assigning (E308') said current backward permutation ($\sigma$) as the composition ($\sigma \cdot \pi^{a-1}$) of said current backward permutation ($\sigma$) with the inverse ($\pi^{a-1}$) of said intermediate forward permutation;

and after the last iteration, a step (E309') of determining said approximations by permuting said current elements (v) with the said current backward permutation ($\sigma$).

**7.** A method according to any of claim 1 to 6, wherein said array of data forms a grid radiance field.

**8.** A device (DC) for compressing a multi-dimensional array of data comprising a plurality of vector elements having the same number R of scalar elements, the device comprising a module of obtaining (M10) D subsequent tensor cores ($C^1$-$C^D$) forming a Tensor Train Decomposition such that:

• said subsequent tensor cores require less memory storage than said array of data,
• each $k^{th}$ tensor core of said D subsequent tensor cores having two said rank axes of size $R_{k-1}$ and $R_k$, with k

between 1 and D, $R_0=1$ and $R_D=R$, the size of said rank axes defining the degree of data approximation precision,
• each $k^{th}$ tensor core ($C^1$-$C^D$) of said D subsequent tensor cores having a said mode axis of size $M_k$, with k between 1 and D,
• each vector element is indexed by D subsequent indices and is approximated by a product of D sections, at said subsequent indices, of said subsequent tensor cores ($C^1$-$C^D$),
• a section at index $i_k$ of a $k^{th}$ core of said D subsequent tensor cores is the $i_k^{th}$ section of this core along its mode axis, with $i_k$ between 1 and $M_k$,
said device comprising a module (MT) of implementing at least one training iteration of said tensor cores, each training iteration comprising following steps of:

• obtaining (E20) current tensor cores;
• obtaining (E30) approximations ($A^1$-$A^B$) of B subsequent vector elements ($E^1$-$E^B$) of said array of data by determining matrix product between sections of said tensor cores ($C^1$-$C^D$) at indices indexing said B subsequent vector elements; and
• modifying (E40) values of said tensor cores with gradient descent, to minimize an approximation error between said B subsequent vector elements ($E^1$-$E^B$) and their obtained approximations ($A^1$-$A^B$),

and a module of obtaining (M50) compression of said array of data from the Tensor Train Decomposition formed by the tensor cores modified after the plurality of iterations.

9. A device (DD) for decompressing a multi-dimensional array of data compressed according to a method of any of claims 1 to 4, said array of data comprising a plurality of vector elements having the same number R of scalar elements, the device comprising a module of obtaining (M10') D subsequent tensor cores ($C^1$-$C^D$) forming a Tensor Train Decomposition such that:

• said subsequent tensor cores require less memory storage than said data,
• each $k^{th}$ tensor core of said D subsequent tensor cores having two said rank axes of size $R_{k-1}$ and $R_k$, with k between 1 and D, $R_0=1$ and $R_D=R$, the size of said rank axes defining the degree of data approximation precision,
• each $k^{th}$ tensor core ($C^1$-$C^D$) of said D subsequent tensor cores having a said mode axis of size $M_k$, with k between 1 and D,
• each vector element is indexed by D subsequent indices and is approximated by a product of D sections, at said subsequent indices, of said subsequent tensor cores ($C^1$-$C^D$),
• a section at index $i_k$ of a $k^{th}$ core of said D subsequent tensor cores is the $i_k^{th}$ section of this core along its mode axis, with $i_k$ between 1 and $M_k$,

said device comprising a module of obtaining (M30') approximations of B subsequent vector elements of said array of data by determining matrix product between sections of said tensor cores ($C^1$-$C^D$) at indices indexing said B subsequent vector elements.

10. A computer program (PROG, PROG') comprising instructions for implementing the steps of a method according to any of claims 1 to 7, when said computer program (PROG, PROG') is executed by a processor (D1, D1').

11. A storage medium (D2, D2') readable by a computer and having recorded thereon a computer program (PROG, PROG') according to claim 10.

**Amended claims in accordance with Rule 137(2) EPC.**

1. A computer-implemented method for compressing a multi-dimensional array of data comprising a plurality of vector elements having the same number R of scalar elements, the method comprising obtaining (E10) D subsequent tensor cores ($C^1$-$C^D$) forming a Tensor Train Decomposition such that:

• said subsequent tensor cores require less memory storage than said array of data,
• each $k^{th}$ tensor core of said D subsequent tensor cores having two rank axes of size $R_{k-1}$ and $R_k$, with k between 1 and D, $R_0=1$ and $R_D=R$, the size of said rank axes defining the degree of data approximation precision,
• each $k^{th}$ tensor core ($C^1$-$C^D$) of said D subsequent tensor cores having a mode axis of size $M_k$, with k between 1 and D,
• each vector element is indexed by D subsequent indices and is approximated by a product of D sections, at said subsequent indices, of said subsequent tensor cores ($C^1$-$C^D$),
• a section at index $i_k$ of a $k^{th}$ core of said D subsequent tensor cores is the $i_k^{th}$ section of this core along its mode axis, with $i_k$ between 1 and $M_k$,

said method comprising at least one training iteration of said tensor cores, each training iteration comprising following steps of:

• obtaining (E20) current tensor cores;
• obtaining (E30) approximations ($A^1$-$A^B$) of B subsequent vector elements ($E^1$-$E^B$) of said array of data by determining matrix product between sections of said tensor cores ($C^1$-$C^D$) at indices indexing said B subsequent vector elements; and
• modifying (E40) values of said tensor cores with gradient descent, to minimize an approximation error between said B subsequent vector elements ($E^1$-$E^B$) and their obtained approximations ($A^1$-$A^B$),
and a step of obtaining (E50) compression of said array of data from the Tensor Train Decomposition formed by the tensor cores modified after the plurality of iterations, and

**characterized in that** said step of obtaining (E30) approximations comprises substeps of:

• selecting (E30A) B subsequent sets of D subsequent indices indexing said B elements of data;
• obtaining (E30B) current elements (v) equal to B subsequent sections of the first tensor core ($C^1$) at each first index of said B subsequent sets;
• initializing (E30C) a first permutation ($\pi$) of B elements, hereafter "current forward permutation", as the identity permutation;
• initializing (E30D) a second permutation ($\sigma$) of B elements, hereafter "current backward permutation", as the identity permutation;

and comprises, for k ranging from 2 to D, iterations of the following substeps:

• permuting (E301) the $k^{th}$ indices ($i_k^1$-$i_k^B$) of said B subsequent sets with said current forward permutation ($\pi$);
• determining (E302) an intermediate forward permutation ($\pi^a$) as a permutation ordering the permuted $k^{th}$ indices;
• permuting (E303) the B subsequent current elements with said intermediate forward permutation ($\pi^a$);
• determining (E304) for each unique value (m) in said $k^{th}$ indices ($i_k^1$-$i_k^B$), a group ($v_m$) associated to the unique value (m), this group ($v_m$) containing elements of the permuted B subsequent current elements ($\pi^a(v)$), these elements having the same positions as the indices of an ordered sequence of the $k^{th}$ indices ($\pi^a(i_k^1 - i_k^B)$), these indices being equal to the unique value (m);
• determining (E305) subsequent updated elements (v'), by applying, for each said group ($v_m$) associated to a said value (m), a matrix product between a section of the $k^{th}$ tensor core ($C^k$) and the elements of this group, this section being at the index equal to the value (m) associated to this group ($v_m$), said matrix product being implemented in parallel for said elements of this group with one instance stored in a memory of said section of the $k^{th}$ tensor core ($C^k$);
• assigning (E306) said current elements (v) as said updated elements (v');
• assigning (E307) said current forward permutation ($\pi$) as the composition ($\pi^a \cdot \pi$) of said intermediate forward permutation ($\pi^a$) with said current forward permutation ($\pi$);
• assigning (E308) said current backward permutation ($\sigma$) as the composition ($\sigma \cdot \pi^{a-1}$) of said current backward permutation ($\sigma$) with the inverse ($\pi^{a-1}$) of said intermediate forward permutation;

and after the last iteration, a step (E309) of determining said approximations by permuting said current elements (v) with said current backward permutation ($\sigma$).

2. A method according to claim 1, wherein each $k^{th}$ tensor core ($C^1$-$C^D$) of said D subsequent tensor cores has a shape $R_{k-1} \times M_k \times R_k$, with k between 1 and D and $R_k$ verifying:

• $R_0 = 1$; and

$$R_k = \min\left(\prod_{j=1}^{k} M_j, R_D \prod_{j=k+1}^{D} M_j, R_{max}\right)$$ for k between 1 and D-1, with $R_{max}$ being a predeter-

mined number as a function of an approximation criterion greater than or equal to $R_D$.

3. A method according to any of claims 1 to 2, wherein said number D and a number M are determined such that $M^D$ is equal to the number of said vector elements of said array of data, and wherein $M_k$ is equal to $M$, for k between 1 and D.

4. A computer-implemented method for decompressing a multi-dimensional array of data compressed according to a method of any of claims 1 to 3, said array of data comprising a plurality of vector elements having the same number R of scalar elements, the method comprising obtaining (E10') D subsequent tensor cores ($C^1$-$C^D$) forming a Tensor Train Decomposition such that:

- said subsequent tensor cores require less memory storage than said data,
- each $k^{th}$ tensor core of said D subsequent tensor cores having two rank axes of size $R_{k-1}$ and $R_k$, with k between 1 and D, $R_0$=1 and $R_D$=R, the size of said rank axes defining the degree of data approximation precision,
- each $k^{th}$ tensor core ($C^1$-$C^D$) of said D subsequent tensor cores having a mode axis of size $M_k$, with k between 1 and D,
- each vector element is indexed by D subsequent indices and is approximated by a product of D sections, at said subsequent indices, of said subsequent tensor cores ($C^1$-$C^D$),
- a section at index $i_k$ of a $k^{th}$ core of said D subsequent tensor cores is the $i_k^{th}$ section of this core along its mode axis, with $i_k$ between 1 and $M_k$,

said method comprising a step of obtaining (E30') approximations of B subsequent vector elements of said array of data by determining matrix product between sections of said tensor cores ($C^1$-$C^D$) at indices indexing said B subsequent vector elements, and
**characterized in that** said step of obtaining (E30) approximations comprises substeps of:

- selecting (E30A') B subsequent sets of D subsequent indices indexing said B elements of data;
- obtaining (E30B') current elements (v) equal to B subsequent sections of the first tensor core ($C^1$) at each first index of said B subsequent sets;
- initializing (E30C') a first permutation ($\pi$) of B elements, hereafter "current forward permutation", as the identity permutation;
- initializing (E30D') a second permutation ($\sigma$) of B elements, hereafter "current backward permutation", as the identity permutation;

and comprises, for k ranging from 2 to D, iterations of the following substeps:

- permuting (E301') the $k^{th}$ indices ($i_k^1$-$i_k^B$) of said B subsequent sets with said current forward permutation ($\pi$);
- determining (E302') an intermediate forward permutation ($\pi^a$) as a permutation ordering the permuted $k^{th}$ indices;
- permuting (E303') the B subsequent current elements with said intermediate forward permutation ($\pi^a$);
- determining (E304') for each unique value (m) in said $k^{th}$ indices ($i_k^1$-$i_k^B$), a group ($v_m$) associated to the unique value (m), this group ($v_m$) containing elements of the permuted B subsequent current elements ($\pi^a(v)$), these elements having the same positions as the indices of an ordered sequence of the $k^{th}$ indices ( $\pi^a(i_k^1 - i_k^B)$ ), these indices being equal to the unique value (m);
- determining (E305') subsequent updated elements (v'), by applying, for each said group ($v_m$) associated to a said value (m), a matrix product between a section of the $k^{th}$ tensor core ($C^k$) and the elements of this group, this section being at the index equal to the value (m) associated to this group ($v_m$), said matrix product being implemented in parallel for said elements of this group with one instance stored in a memory of said section of the $k^{th}$ tensor core ($C^k$);
- assigning (E306') said current elements (v) as said updated elements (v');
- assigning (E307') said current forward permutation ($\pi$) as the composition ($\pi^a \cdot \pi$) of said intermediate forward permutation ($\pi^a$) with said current forward permutation ($\pi$);
- assigning (E308') said current backward permutation ($\sigma$) as the composition ($\sigma \cdot \pi^{a-1}$) of said current backward permutation ($\sigma$) with the inverse ($\pi^{a-1}$) of said intermediate forward permutation;

and after the last iteration, a step (E309') of determining said approximations by permuting said current elements (v) with the said current backward permutation ($\sigma$).

5. A method according to any of claims 1 to 4, wherein said array of data forms a grid radiance field.

6. A device (DC) for compressing a multi-dimensional array of data comprising a plurality of vector elements having the same number R of scalar elements, the device comprising a module of obtaining (M10) D subsequent tensor cores ($C^1$-$C^D$) forming a Tensor Train Decomposition such that:

    • said subsequent tensor cores require less memory storage than said array of data,
    • each $k^{th}$ tensor core of said D subsequent tensor cores having two rank axes of size $R_{k-1}$ and $R_k$, with k between 1 and D, $R_0$=1 and $R_D$=R, the size of said rank axes defining the degree of data approximation precision,
    • each $k^{th}$ tensor core ($C^1$-$C^D$) of said D subsequent tensor cores having a mode axis of size $M_k$, with k between 1 and D,
    • each vector element is indexed by D subsequent indices and is approximated by a product of D sections, at said subsequent indices, of said subsequent tensor cores ($C^1$-$C^D$),
    • a section at index $i_k$ of a $k^{th}$ core of said D subsequent tensor cores is the $i_k^{th}$ section of this core along its mode axis, with $i_k$ between 1 and $M_k$,
said device comprising a module (MT) of implementing at least one training iteration of said tensor cores, each training iteration comprising following steps of:

    • obtaining (E20) current tensor cores;
    • obtaining (E30) approximations ($A^1$-$A^B$) of B subsequent vector elements ($E^1$-$E^B$) of said array of data by determining matrix product between sections of said tensor cores ($C^1$-$C^D$) at indices indexing said B subsequent vector elements; and
    • modifying (E40) values of said tensor cores with gradient descent, to minimize an approximation error between said B subsequent vector elements ($E^1$-$E^B$) and their obtained approximations ($A^1$-$A^B$),

and a module of obtaining (E50) compression of said array of data from the Tensor Train Decomposition formed by the tensor cores modified after the plurality of iterations, and **characterized in that** said step of obtaining (E30) approximations comprises substeps of:

    • selecting (E30A) B subsequent sets of D subsequent indices indexing said B elements of data;
    • obtaining (E30B) current elements (v) equal to B subsequent sections of the first tensor core ($C^1$) at each first index of said B subsequent sets;
    • initializing (E30C) a first permutation ($\pi$) of B elements, hereafter "current forward permutation", as the identity permutation;
    • initializing (E30D) a second permutation ($\sigma$) of B elements, hereafter "current backward permutation", as the identity permutation;

and comprises, for k ranging from 2 to D, iterations of the following substeps:

    • permuting (E301) the $k^{th}$ indices ($i_k^1$-$i_k^B$) of said B subsequent sets with said current forward permutation ($\pi$);
    • determining (E302) an intermediate forward permutation ($\pi^a$) as a permutation ordering the permuted $k^{th}$ indices;
    • permuting (E303) the B subsequent current elements with said intermediate forward permutation ($\pi^a$);
    • determining (E304) for each unique value (m) in said $k^{th}$ indices ($i_k^1$-$i_k^B$), a group ($v_m$) associated to the unique value (m), this group ($v_m$) containing elements of the permuted B subsequent current elements ($\pi^a(v)$), these elements having the same positions as the indices of an ordered sequence of the $k^{th}$ indices ( $\pi^a(i_k^1 - i_k^B)$ ), these indices being equal to the unique value (m);
    • determining (E305) subsequent updated elements (v'), by applying, for each said group ($v_m$) associated to a said value (m), a matrix product between a section of the $k^{th}$ tensor core ($C^k$) and the elements of this group, this section being at the index equal to the value (m) associated to this group ($v_m$), said matrix product being implemented in parallel for said elements of this group with one instance stored in a memory of said section of the $k^{th}$ tensor core ($C^k$);
    • assigning (E306) said current elements (v) as said updated elements (v');
    • assigning (E307) said current forward permutation ($\pi$) as the composition ($\pi^a \cdot \pi$) of said intermediate forward permutation ($\pi^a$) with said current forward permutation ($\pi$);
    • assigning (E308) said current backward permutation ($\sigma$) as the composition ($\sigma \cdot \pi^{a-1}$) of said current

backward permutation ($\sigma$) with the inverse ($\pi^{a-1}$) of said intermediate forward permutation;

and after the last iteration, a step (E309) of determining said approximations by permuting said current elements (v) with said current backward permutation ($\sigma$).

7. A device (DD) for decompressing a multi-dimensional array of data compressed according to a method of any of claims 1 to 3, said array of data comprising a plurality of vector elements having the same number R of scalar elements, the device comprising a module of obtaining (M10') D subsequent tensor cores ($C^1$-$C^D$) forming a Tensor Train Decomposition such that:

• said subsequent tensor cores require less memory storage than said data,
• each $k^{th}$ tensor core of said D subsequent tensor cores having two rank axes of size $R_{k-1}$ and $R_k$, with k between 1 and D, $R_0$=1 and $R_D$=R, the size of said rank axes defining the degree of data approximation precision,
• each $k^{th}$ tensor core ($C^1$-$C^D$) of said D subsequent tensor cores having a mode axis of size $M_k$, with k between 1 and D,
• each vector element is indexed by D subsequent indices and is approximated by a product of D sections, at said subsequent indices, of said subsequent tensor cores ($C^1$-$C^D$),
• a section at index $i_k$ of a $k^{th}$ core of said D subsequent tensor cores is the $i_k^{th}$ section of this core along its mode axis, with $i_k$ between 1 and $M_k$,
said device comprising a module of obtaining (M30') approximations of B subsequent vector elements of said array of data by determining matrix product between sections of said tensor cores ($C^1$-$C^D$) at indices indexing said B subsequent vector elements, and
**characterized in that** said step of obtaining (E30) approximations comprises substeps of:

• selecting (E30A') B subsequent sets of D subsequent indices indexing said B elements of data;
• obtaining (E30B') current elements (v) equal to B subsequent sections of the first tensor core ($C^1$) at each first index of said B subsequent sets;
• initializing (E30C') a first permutation ($\pi$) of B elements, hereafter "current forward permutation", as the identity permutation;
• initializing (E30D') a second permutation ($\sigma$) of B elements, hereafter "current backward permutation", as the identity permutation;

and comprises, for k ranging from 2 to D, iterations of the following substeps:

• permuting (E301') the $k^{th}$ indices ($i_k^1$-$i_k^B$) of said B subsequent sets with said current forward permutation ($\pi$);
• determining (E302') an intermediate forward permutation ($\pi^a$) as a permutation ordering the permuted $k^{th}$ indices;
• permuting (E303') the B subsequent current elements with said intermediate forward permutation ($\pi^a$);
• determining (E304') for each unique value (m) in said $k^{th}$ indices ($i_k^1$-$i_k^B$), a group ($v_m$) associated to the unique value (m), this group ($v_m$) containing elements of the permuted B subsequent current elements ($\pi^a(v)$), these elements having the same positions as the indices of an ordered sequence of the $k^{th}$ indices

( $\pi^a\left(i_k^1 - i_k^B\right)$ ), these indices being equal to the unique value (m);
• determining (E305') subsequent updated elements (v'), by applying, for each said group ($v_m$) associated to a said value (m), a matrix product between a section of the $k^{th}$ tensor core ($C^k$) and the elements of this group, this section being at the index equal to the value (m) associated to this group ($v_m$), said matrix product being implemented in parallel for said elements of this group with one instance stored in a memory of said section of the $k^{th}$ tensor core ($C^k$);
• assigning (E306') said current elements (v) as said updated elements (v');
• assigning (E307') said current forward permutation ($\pi$) as the composition ($\pi^a \cdot \pi$) of said intermediate forward permutation ($\pi^a$) with said current forward permutation ($\pi$);
• assigning (E308') said current backward permutation ($\sigma$) as the composition ($\sigma \cdot \pi^{a-1}$) of said current backward permutation ($\sigma$) with the inverse ($\pi^{a-1}$) of said intermediate forward permutation;

and after the last iteration, a step (E309') of determining said approximations by permuting said current elements (v) with the said current backward permutation ($\sigma$).

**8.** A computer program (PROG, PROG') comprising instructions for implementing the steps of a method according to any of claims 1 to 5, when said computer program (PROG, PROG') is executed by a processor (D1, D1').

**9.** A storage medium (D2, D2') readable by a computer and having recorded thereon a computer program (PROG, PROG') according to claim 8.

[Fig. 1]

[Fig 2A]

[Fig. 2B]

[Fig. 3]

[Fig. 4]

E10' — $C^1 \text{-} C^D$

$\downarrow$

E30' — E30A'-E30D', E301'-E309'

$\downarrow$

$A^1 \text{-} A^B$

[Fig. 5]

DC —

M10 — MT

MT — M50

[Fig. 6]

DD —

M10' — M30'

[Fig. 7]

[Fig. 8]

[Fig. 9]

Europäisches
Patentamt

European
Patent Office

Office européen
des brevets

## EUROPEAN SEARCH REPORT

**Application Number**

EP 22 19 3316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ANPEI CHEN ET AL: "TensoRF: Tensorial Radiance Fields", ARXIV.ORG, CORNELL UNIVERSITY LIBRARY, 201 OLIN LIBRARY CORNELL UNIVERSITY ITHACA, NY 14853, 17 March 2022 (2022-03-17), XP091203422, * pages 1-3 * * pages 5, 6, paragraph 3 * * figure 2 * * page 10 * | 1-11 | INV. G06T9/00 G06N3/08 |
| A | CICHOCKI A ET AL: "Tensor Networks for Dimensionality Reduction and Large-Scale Optimizations. Part 2 Applications and Future Perspectives", ARXIV.ORG, CORNELL UNIVERSITY LIBRARY, 201 OLIN LIBRARY CORNELL UNIVERSITY ITHACA, NY 14853, 30 August 2017 (2017-08-30), XP080955220, DOI: 10.1561/2200000067 * pages 96-99, paragraph 3.2 * | 1-11 | |

TECHNICAL FIELDS SEARCHED (IPC)

G06T

The present search report has been drawn up for all claims

| Place of search | Date of completion of the search | Examiner |
|---|---|---|
| Munich | 26 January 2023 | Di Cagno, Gianluca |

EPO FORM 1503 03.82 (P04C01)

**EP 4 332 903 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OSELEDETS.** *Tensor-Train Decomposition,* 2011
- **ZHOU et al.** *Optimal High-order Tensor SVD via Tensor-Train Orthogonal Iteration,* 2022
- **OSELEDETS et al.** *TT-cross approximation for multidimensional arrays,* 2009
- **DOLGOV.** *Computation of extreme eigenvalues in higher dimensions using block tensor train format,* 2014
- **CHEN et al.** *TensoRF: Tensorial Radiance Fields,* 2022
- **HOLTZ.** *On manifolds of tensors of fixed TT-rank,* 2012
- **DOLGOV.** *Computation of Extreme Eigenvalues in Higher Dimensions Using Block Tensor Train Format,* 2013